# EUROPEAN PATENT SPECIFICATION

(11) **EP 0 197 128 B1**
(45) Date of publication and mention of the grant of the patent: **17.08.1994**
(21) Application number: 85905264.9
(22) Date of filing: 07.10.1985
(51) Int. Cl.: C08K 5/52, D06M 13/46, D06M 13/248, D06M 13/282

(54) **MICROBIOCIDAL COMPOSITION AND METHOD OF PREPARATION THEREOF**
MIKROBIELLE ZUSAMMENSETZUNG UND DEREN HERSTELLUNG
COMPOSITION MICROBICIDE ET SON PROCEDE DE PREPARATION

(30) Priority: 09.10.1984 US 658695
(43) Date of publication of application: 15.10.1986
(73) Proprietor: INTERFACE RESEARCH CORPORATION, Atlanta, GA 30339 (US)
(72) Inventor: McINTOSH, Robert H., Greensboro, NC 37403 (US)
(74) Representative: Bassett, Richard Simon
(86) International application number: US8501944
(87) International publication number: WO8602369

(56) References cited:
- EP-A- 0 018 492
- DE-A- 3 248 708
- DE-B- 1 228 031
- JP-A-53 081 577
- US-A- 2 337 424
- US-A- 2 756 175
- US-A- 2 922 738
- US-A- 2 935 490
- US-A- 2 976 186
- US-A- 2 997 454
- US-A- 3 294 775
- US-A- 3 364 192
- US-A- 3 475 204
- US-A- 3 979 307
- US-A- 4 235 733

## Description

### Technical Field

The present invention relates to microbiocidal compositions and methods for the preparation and use of such compositions. Properly used in accordance with the present invention, these microbiocidal compositions are effective in killing or inhibiting a wide variety of harmful, destructive, or offensive microorganisms including viruses, bacteria, yeasts and molds.

### Background

Discussion of the present invention and its background will be facilitated by definition of several terms.

As used herein, the term "microorganism" means any organism that cannot be seen with the naked eye and includes organisms such as bacteria, molds, yeasts, fungi and viruses. "Antimicrobial" and "microbiocidal" describe the killing of, as well as the inhibition of the growth of, bacteria, yeasts, fungi, and molds. "Bactericidal" describes the killing or inhibition of the growth of bacteria. "Fungicidal" describes the killing of, as well as the inhibition of the growth of, fungi, yeasts and molds. The term "viricidal" is used to describe the inactivation of virus particles so that they are unable to infect host cells.

The term "plastic," as used herein, includes both thermosetting and thermoplastic materials. Examples of "plastic" materials include, but are not limited to, polyolefins (such as polyethylenes, polypropylenes, polybutylenes) polystyrenes, vinyl phenolics, vinyl acetates, polymeric vinyl chlorides, ureas, melamines, acrylics, polyesters, epoxies and nylons. The term "molded" as used in this application is used in its broad sense to include any technique for forming plastic or other materials. Molding is generally, but not always, accomplished with elevated termperature and includes, but is not limited to, forming methods such as potting, extruding, sheeting, calendering, pulltruding, casting, vacuum forming, blow molding, and the like.

The term "cleansing agent" includes any substance capable of cleaning, emulsifying, or removing unwanted material from a surface. The term "detergent" describes any substance or product which is capable of dislodging, removing, or dispersing solid and liquid soils from a surface being cleansed. The term "detergent" also includes soaps comprising metal salts of long chain fatty acids. The term "disinfectant" includes any liquid that is capable of killing or inhibiting microorganisms.

Bacteria, fungi, viruses and other microorganisms are always present in our environment. Such microorganisms are frequently an essential part of ecological systems, industrial processes and healthy human and animal bodily functions such as digestion. In other instances, however, the presence of microorganisms is highly undesirable because they may cause illnesses or death of humans and animals, create odors and damage or destroy a wide variety of materials.

The species and numbers of microorganisms present vary depending on the general environment, on the nutrients and the moisture available for the growth of the microorganisms, and on humidity and temperature of the local environment. Nutrients for microorganisms abound in the normal environment. Any protein matter such as dried skin, discarded foods, plants, and animal wastes all are excellent nutrient media for many types of potentially harmful microorganisms. Furthermore, many organic synthetic and natural materials like plastic coatings and objects, and wood, paper and natural fibers can serve as nutrients for miccroorganisms which will degrade those materials. In addition, certain bacteria are capable of remaining viable in a dormant state on floors or on objects for long periods of time until they are deposited in the proper media for growth. Consequently, potentially harmful microorganisms can be transported merely by walking on floors, brushing against walls or furniture or by handling objects.

It is well recognized that a major difficulty in health care facilities, such as hospitals and nursing homes, is the spread of dangerous infectious diseases caused by a wide variety of microorganisms. The problem is exacerbated in these facilities because many of the patients are in a weakened condition due to their primary health care problem. A microorganism that would not be a major threat to a healthy person could be fatal to a patient with a diminished capacity to defend himself from infection.

Potentially dangerous microorganisms are spread in health care facilities and elsewhere by a variety of vectors. One of the most common vectors is health care personnel. For example, a nurse or doctor may administer care to one patient and then be called upon to treat a second patient. Even though he or she may carefully wash his or her hands before treating the second patient, potentially dangerous microorganisms may be transferred from the first patient to the second patient. The microorganism can then cause a serious infection in the second patient.

Furthermore, plastic products are often used in hospitals and other health care facilities. These products are particularly susceptable to contamination by bacteria and other harmful organisms. Conventionally, the plastic products in these facilities are periodically cleaned with strong cleansers to remove or kill accumulated microorganisms. Between these cleanings, however, it is possible for the plastic products to accumulate a sufficient quantity or quality of bacteria or other microorganisms to constitute a major vector for cross-infection or spread of infectious diseases.

Pathogenic microorganisms can also be deposited on fabrics such as towels, clothes, laboratory coats and other fabrics. These microorganisms can remain viable on these fabrics for long periods of time. If the fabrics are used by several different people, the microorganisms can be transferred by people walking from one part of the facility to another.

As mentioned above, the plastics that are used to make plastic objects and coatings can themselves be a substrate for growth of various microorganisms, such as bacteria, mold and mildew. The same is true for fibers and fabrics, some of which are plastics and other organic materials such as wood and paper. When these microorganisms grow on or in a plastic product, fiber, or fabric, they form unsightly colonies. In addition, such microorganisms can eventually break down a plastic, fiber, fabric, or other material. Plastic, fiber and fabric products often must therefore be frequently cleaned with a strong cleanser to destroy, or at least control, the growth of the microorganisms. A more effective approach to the problem is clearly needed.

Potentially destructive microorganisms also tend to collect and reside in clothing and in fabrics regardless of whether they provide a nutrient substrate. Clothing that is used when exercising is particularly susceptable to the accumulation of destructive microorganisms. If these microorganisms are not killed or inhibited, they may cause extensive damage to the fabric, not to mention causing offensive odors and infections. Washing with conventional detergents does not always kill or remove many of these microorganisms. Thus, a microbiocidal additive is needed that will kill or inhibit the microorganisms residing on the fabric and, at the same time, not cause deterioration of the fabric and not cause adverse physical reactions in the individual that is wearing the fabric.

In short, the control of microbial contamination and infection has been a major problem throughout history in both industry and the home, and such infection and contamination continues to cause disease, death, and destruction of property. It has proved difficult, however, to develop a microbiocidal additive that is effective in controlling the growth of a wide variety of unwanted microorganisms and is, at the same time, safe for use around human beings and animals. Accordingly, there is an acute need, both in industry and in the home, for a safe and effective microbiocidal additive that can be used in or on a wide variety of substances to impart microbiocidal activity to the product from which the substance is made.

One of the sources of difficulty in the control of potentially harmful microorganisms is the extreme variability of response of various microorganisms to conventional microbiocidal agents. For example, bacteria which are classified as procaryotes, can be killed or inhibited by many different types of antibiotics. However, these same antibiotics that are effective against procaryotic organisms are usually ineffective against eucaryotic microorganisms, such as fungi and yeasts.

There are two broad categories of bacteria known as Gram-positive and Gram-negative bacteria. These classifications stem from the ability or non-ability of bacteria to absorb certain vital stains, and the two groups of bacteria generally respond differently to the same microbiocidal agent. A particular agent that may be effective against one group may not be effective against the other group.

One conventional method of inhibiting the growth of both eucaryotes and procaryotes or both Gram-negative and Gram-positive bacteria is to combine two or more microbiocidal inhibitors, each designed to inhibit or kill a specific organism or class of organisms. However, various problems arise when introducing two or more additives into a material such as a detergent. The multiple additive system may alter the physical properties of the detergent into which it is mixed. In addition, the multiple components must be tested to insure compatibility and continued microbiocidal effectiveness when combined with the detergent. The relative microbiocidal or microbiostatic strength of each of the components in the multiple system must be determined. It is not uncommon for the combination of microbiocidal additives to initially have effective inhibiting or killing properties for both Gram-positive and Gram-negative organisms whereupon, with the passage of time, one or the other of the inhibiting additives will deteriorate and lose its effectiveness while the other inhibiting additive remains effective. In addition, one additive may have an unexpected inhibitory effect on the other additive. In addition, the requirement of adding two or more additives can become prohibitively expensive.

The ideal microbiocidal additive must be non-toxic to humans and animals around which the additive is used. Such an additive should not cause an allergic reaction and must have no long term detrimental health effects on humans or animals Finally, such an microbiocidal additive should be compatible with the material with which it is being used and not cause the material to deteriorate or lose its desired properties.

DE-A-1 228 031 disclosed that a mixture of mono- and dialkyl phosphates has low bactericidal activity unless condensed with phosphorus pentoxide. DE-A-248 708 disclosed that 1:1 amine salts of dialkyl phosphates have microbiocidal activity.

### Summary of the Invention

The present invention is a microbiocidal composition comprising a mixture of a substance, a mono-alkyl phosphate derivative having the following formula: 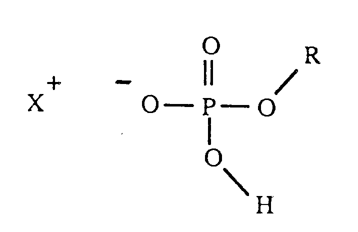
wherein R is an alkyl group of from 1 to 18 carbon atoms, and X is cocoamine, and the corresponding dialkylphosphate derivative, the substance being selected from the group consisting of plastics, fibers, fabrics, water, wood, detergents, non-permanent coatings and permanent coatings.

The present invention solves the problems described above by providing a composition including a broad spectrum, non-toxic, microbiocidal additive that is effective in killing or inhibiting a wide variety of microorganisms including viruses, bacteria, yeasts, molds and fungi.

This microbiocidal additive of the present invention can be added to a wide variety of materials in accordance with the present invention to impart microbiocidal activity to those materials.

For instance, the microbiocidal additive of the present invention can be added to aqueous solutions of detergents in accordance with the present invention to provide microbiocidal cleansing agents. In addition, the present invention can be added to water or other solvents to provide an effective disinfectant.

Additionally, the microbiocidal additive of the present invention can be added to both permanent and non-permanent coating materials in accordance with the present invention. When the coating material is applied to a surface, the microbiocidal additive that has been added to the coating material will impart long lasting microbiocidal activity to the surface.

Furthermore, the microbiocidal additive of the present invention can also be incorporated into a wide variety of plastics in accordance with the present invention to impart microbiocidal activity to the objects made from the plastics. When incorporated into the plastic material, the microbiocidal additive of the present invention inhibits the growth of microorganisms over a long period of time and protects the plastic from degradation by harmful microorganisms. In addition, the microbiocidal additive utilized in accordance with the present invention does not change the desirable properties of the plastic material.

The microbiocidal additive of the present invention can be applied topically to both natural and synthetic fibers in accordance with the present invention. The present invention can also be incorporated directly into synthetic fibers to impart microbiocidal activity to the fibers or to fabrics made from the fibers. In addition, the microbiocidal additive of the present invention can be applied directly to a fabric.

As a final illustration, the above described microbiocidal additive of the present invention can be applied to materials as a preservative. For example, the additive can be applied to wood and wood products to inhibit the deterioration of the product due to microbiocidal growth. The microbiocidal additive utilized in practicing the present invention can also be mixed with liquids such as inks, fuels, and cutting oils to inhibit the growth of microorganisms. The microbiocidal additive of the present invention is capable of killing the causitive organism of Legionaires' disease, *Legionella pneumophilia.* Thus, the present invention embraces addition of the identified compound to cooling tower water to control the growth of this pathological organism.

These and other objects, features and advantages of the present invention will become apparent after a review of the following detailed description of the disclosed embodiment and the appended claims.

### Detailed Description of the Preferred Embodiment

The present invention relates to compositions including microbiocidal alkyl phosphate derivatives. When used in accordance with the present invention, cocoaminealkyl phosphate derivatives are capable of killing or inhibiting the growth of a wide variety of microorganisms including fungi, yeasts, viruses and bacteria.

The alkyl phosphate derivative utilized in accordance with the present invention inhibits the growth of the following representative Gram-negative and Gram-positive bacteria: *Sarcina lutea*; *Staphylococcus species*, *Pseudomonas aeruginosa*, *Pseudomonas cepacia*, *Escherichia coli*, *Escherichia communior*, *Bacillus subtilis*, *Klebsiella species, Salmonella species*, *Legionella pneumophilia*, *Enterobacter aerogenes* and *Streptococcus species*. The alkyl phosphate derivative also inhibits the growth of the following representative fungi and yeasts: *Candida albicans, Trichophyton metagrophytes*, *Trichophyton rubrum*, *Trichophyton interdigitale* and *Aspergillus niger*. In addition, the alkyl phosphate derivative also inactivates *Herpes simplex* virus. The foregoing microorganisms are representative of those organisms that are responsible for infections in hospitals and other health care facilities.

The microbiocidal additive of the present invention can be added to water or other solvents to provide a disinfectant or can be added to a conventional detergent to provide a microbiocidal cleansing agent. The detergents that can be used in the present invention include, but are not limited to, linear alkyl sulfonates and alkyl benzene sulfonates. These detergents also include, but are not limited to, metal salts of long chain fatty acids.

Such a microbiocidal cleansing agent is effective in killing or significantly inhibiting the growth of a wide spectrum of both procaryotic and eucaryotic microorganisms which may reside on surfaces to be cleaned or treated with the microbiocidal detergent. Thus, in accordance with the present invention, it has been determined that certain alkyl phosphate derivatives provide unique and unexpected fungicidal, viricidal and bactericidal properties to a conventional detergent.

The microbiocidal additive of the present invention can be mixed in water at various concentrations and be used as a disinfecting agent to kill or inhibit microorganisms that may reside on that surface. For example, a solution of the additive of the present invention containing from approximately 500 to 1000 parts per million (PPM) of the alkyl phosphate derivative makes an excellent disinfectant for light duty such as mopping and cleaning of hard surfaces such as vinyl walls, floors, counters and table tops.

For more demanding microbiocidal activity such as that required for a surgical scrub, the alkyl phosphate derivative can be mixed in with a conventional detergent at a concentration of between approximately 15% and 70% by weight.

The microbiocidal cleansing agent prepared by the addition of the microbiocidal additive of the present invention to a conventional cleansing agent has the capacity to kill or inhibit the growth of many types of bacteria, fungi, viruses, yeasts and other destructive or disease-producing microorganisms which might be on a surface. Such a microbiocidal cleansing agent is particularly effective against both Gram-positive bacteria, such as *Staphylococcus aureus*, and Gram-negative bacteria, such as *Pseudomonas aeruginosa*.

The microbiocidal additive of the present invention can also be added to a wide variety of permanent and non-permanent coating materials. These coatings include paints of various kinds, waxes, and plastic coatings. When the coating material is applied to a surface, the microbiocidal additive in the coating material will impart microbiocidal activity to the surface. The coating materials that can be used with the microbiocidal additive of the present invention include, but are not limited to, coatings formed from materials including the acrylate and methacrylate polymers and copolymers; the vinyl polymers including polyvinyl chloride, polyvinyl acetate, polyvinyl butyral, polyvinyl chloride-acetate, vinyl chloride-vinylidine chloride copolymers; the polyethylene polymers including polyethylene, polyhalogenated ethylenes, polystyrene and the styrenated alkyds. Further coating materials include thermosetting as well as other thermoplastic materials. Illustrative of such materials are the alkyd resins including the modified alkyds and the terpenic and maleic alkyds, the amino resins including urea-formaldehyde and melamine-formaldehyde; the protein plastics including casein, zein, keratin, peanut and soy bean plastics; the cellulosics including cellulose acetate, cellulose nitrate, cellulose acetate butyrate, regenerated cellulose, lignocellulose, ethyl cellulose, hydroxyethyl cellulose and carboxymethyl cellulose; the epoxy resins; the ethylene and fluoroethylene polymers; the furan resins; the polyamides; the phenolics including phenol-formaldehyde phenol-furfural and resorcinol-formaldehyde, the polyester resins including the saturated polyesters, the unsaturated polyesters and the polyfunctional unsaturated esters and the silicones.

The microbiocidal additive of the present invention can be mixed in accordance with the present invention with paint or other coatings and applied to underwater surfaces to inhibit the growth of marine organisms on such coated surfaces.

The microbiocidal additive of the present invention can be added to a coating material at a concentration of between 0.01 to 10% by weight. The preferred concentration of mono-alkyl phosphate derivative in the coating material is between about 0.1% and 6% by weight.

The microbiocidal additive of the present invention can be incorporated into plastics to impart microbiocidal activity to the plastic products. Plastics treated with the present invention can be used to make a wide variety of products such as furniture, medical items, eating utensils and the like. There are many advantages to constructing products from plastic materials including lower cost and the possibility of molding the items in a variety of different shapes. Examples of the type of products contemplated include, but are not limited to, mattress covers, crib covers, bassinet covers, draw sheets, cubicle curtains, male and female urinals, toilet seats, bed pans, bed pan liners, wash basins, laminated sheets of melamine and phenolic plastics such as Formica™, Micarta™, and other similar decorative surfacing materials, carafes, tooth brushes, hair brushes, combs, soap holders, denture cups, rolls of utility sheeting, catheters, drainage bags, colostomy pouches, ileostomy pouches, intravenous solution bags, irrigation solution bags, blood bags, tubing, administration sets, donor sets, fountain syringes, enema bags, contact lens holders, examination equipment covers for all classes of trade including a medical doctor, veterinarian, dentists, optometrist, ophthalmologist, and optician, moisture barrier for the building trade to eliminate mold and mildew, table tops, food handling trays, wall paneling, hard floor covering, epoxy tiles, epoxy grout, ceramic tile grout, carpet base, shower curtains, bath mats, and telephone caps for mouth piece and reception unit. The product in some instances may be molded using standard plastic molding techniques. In other instances the product may be assembled from cut or molded parts into a finished product.

The mono-alkyl phosphate derivative is present in the plastic material at a concentration of between approximately 0.1 and 10% by weight. A preferred range of mono-alkyl phosphate derivative in the plastic material is between approximately 1% and 6% by weight.

The microbiocidal additive of the present invention can be applied topically to both natural and synthetic fibers or can be incorporated directly into synthetic fibers during the manufacturing process. The fibers that can be used with the microbiocidal additive of the present invention include but are not limited to fibers made of wool; cotton; polyolefin fiber including polypropylene, polybutenes, polyisoprene and their copolymers; polyester fiber including polyethylene terephthalate; polyaramid fiber; cellulose acetate fiber; rayon fiber; nylon fiber; polystyrene fiber; vinyl phenolic fiber; vinyl acetate fiber; vinyl chloride fiber; acrylic fiber; acrylonitrile fiber; and polyurethane fiber.

Fabrics can also be treated with the microbiocidal additive of the present invention. These fabrics include, but are not limited to, woven fabrics made from all of the aforementioned fibers or non-woven fabrics. The non-woven fabrics can be made, for instance, by entangling fibers in a needling process, by using a thermoplastic or adhesive backing or binder, or by fusing fibers together with heat.

The alkyl phosphate derivative can be applied to the fiber or fabric by mixing the alkyl phosphate derivative with a liquid such as water or other solvent or dispersant and then dipping, spraying or washing the fiber or fabric in the alkyl phosphate derivative mixture. The concentration of mono-alkyl phosphate derivative in the water or other solvent or dispersant is between 0.01% and 30% by weight. The preferred concentration of mono-alkyl phosphate derivative in dispersant or solvent is between 0.1% and 10% by weight. The most preferred concentration of mono-alkyl phosphate derivative in dispersant or solvent is between 1% and 6% by weight. Suitable solvents that can be used to apply the alkyl phosphate derivative include, but are not limited to, benzene, toluene, xylene. and hexane. After applying the mixture, the fiber or fabric will be coated with the mono-alkyl phosphate derivative. Therefore, when microorganisms comes into contact with the fiber or fabric, the mono-alkyl phosphate derivative will kill or inhibit the growth of the microorganism.

The mono-alkyl phosphate derivative of the present invention can also be homogeneously distributed in a solvated fiber dope or a fiber melt before the fiber is spun at a concentration of between approximately 0.01% and 10% by weight. The preferred concentration of the mono-alkyl phosphate derivative in fiber or fabric is between 0.1% and 6% by weight.

In accordance with the present invention, the mono-alkyl phosphate derivative can be incorporated directly into natural or synthetic rubber, including latex rubber, polyvinyl acetate or polyvinyl chloride backings or binders that are applied to a fabric. It has been unexpectedly found that, when properly incorporated in accordance with the present invention, a portion of the microbiocidal additive of the present invention will slowly migrate from the fabric backing or binder onto the fibers of the fabric thereby imparting microbiocidal activity to the fabric.

Examples of the type of fiber or fabric products contemplated include, but are not limited to, surgical gauze, padding on wound dressings, mattress covers, crib covers, bassinet covers, sailboat sails, tents, draw sheets, cubicle curtains, tooth brushes, hair brushes, fabric wall covering, fabric base, fabric shower curtains, bath mats, athletic clothing such as underclothes, shirts, socks, shorts, pants, shoes and the like, and hospital clothing such as examination robes, physicians coats and nurses uniforms.

The microbiocidal additive of the present invention can be used as a preservative to prevent degradation of a product due to growth of microorganisms. For example, the alkyl phosphate derivative can be mixed with water or oil and sprayed on wood to preserve the wood against breakdown due to microorganisms. Small amounts of the derivative can be added to inks to prevent the growth of microorganisms which will clog ink jets. The derivative can be added to cutting oils to prolong the useful life of the oil. The additive is also useful in inhibiting growth of microorganisms in fuel and thereby decreasing the likelihood of clogged fuel jets.

In accordance with the present invention, the alkyl phosphate derivative can be added to the water in cooling towers or can be included in a coating that is used to coat the surfaces in cooling towers to kill or inhibit the growth of the pathogen that causes Legionaire's disease, *Legionella pneumophilia*.

The microbiocidal additive of the present invention can be used to coat air and other filter material and media thereby killing or reducing the growth of microorganisms in filters. The filter material can be particulate or can be fibrous in composition. When fluids pass through the filter and microorganisms are deposited upon the filter material or exposed to the filter material, the microbiocidal additive of the present invention will inhibit or kill the organism.

The additives can also be added in accordance with the present invention to various grouts, cements and concretes to impart microbiocidal activity to the material. For example, between about 0.01 and 10% of the microbiocidal compound of the present invention can be added to tile grout before application to a surface. The preferred concentration of the microbiocidal additive in grout, cement or concrete is between 0.1% and 6%. The present invention will prevent unsightly mold or mildew from growing in or on the grout, concrete, or cement material.

The alkyl phosphate derivative has also been found to be an effective insecticidal agent and an insect repelling agent. When insects such as flies or fleas come into contact with a product treated with the mono-alkyl phosphate derivative of the present invention, the insects are killed or repelled. The insecticidal alkyl phosphate derivative when used in accordance with the present invention can be utilized as an aqueous mixture or can be incorporated into a number of materials such as plastics and the like.

When the alkyl phosphate derivative is mixed with water, it can be applied directly to a surface to impart insecticidal and insect repellant qualities to the surface. In addition, the insecticidal alkyl phosphate additive of the present invention can be mixed with an aqueous detergent and used to wash objects or animals. For example, an aqueous detergent with the alkyl phosphate additive makes an excellant soap for washing dogs and cats. The treated detergent kills any fleas that may be on the dog or cat and will repel any new fleas for a long period of time. The alkyl phosphate additive of the present invention is not toxic to the dog or cat.

The mono-alkyl phosphate derivative has also been found to be an effective deodorant.

The microbiocidal additive of the present invention if a mixture of a mono-alkyl phosphate derivative having the following formula: 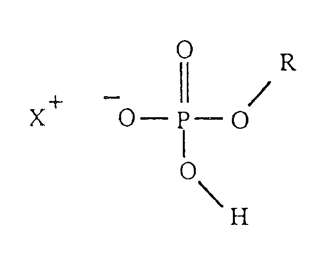
wherein:
- R: = an alkyl group of from 1 to 18 carbon atoms.
- X: = cocoamine cation and the corresponding dialkyl compound.

The positively charged ion is not necessary for microbiocidal activity.

Preferably, R = an alkyl group of from 6 to 18 carbon atoms.

The compounds defined by this formula are water insoluble or only slightly soluble in water. An aqueous suspension of the mono-alkyl phosphates with the alkyl group of greater than 6 carbon atoms in the R position can be prepared by adding a surfactant such as Tween 80 (Sigma Chemical Company, St. Louis, MO).

Alternatively, R = an alkyl group of from 1 to 5 carbon atoms.

The compounds additive defined by this formula are water soluble.

An additional preferred structure of the microbiocidal additive of the present invention has the following formula: 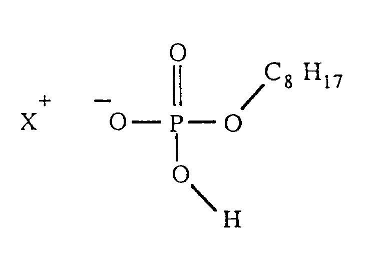
wherein:
X is a positive ion as described above.

Another especially preferred embodiment of the present invention has the following formula: 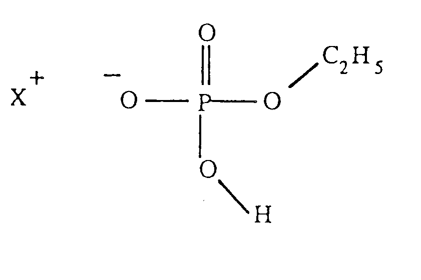
wherein:
X is a positive ion as described above.

This embodiment of the microbiocidal additive of the present invention is soluble in water.

When the additive utilized in accordance with the present invention is incorporated into a non-aqueous material such as a plastic or fiber, the microbiocidal activity of the product is improved by the presence of the tertiary amine moiety.

It is to be understood that the purpose of the large organic ion is to promote diffusion of the mono-alkyl phosphate from the interior of the plastic or fiber to its surface thereby increasing the microbiocidal activity on the surface of the plastic or fiber. The ion is not necessary for microbiocidal activity.

The microbiocidal additive of the present invention may be prepared as follows: One mole of phosphorous pentoxide is reacted with three moles of an alcohol. The alcohol may have between 1 and 18 carbon atoms and the alcohol should be heated to a temperature of between approximately 60° and 120° C depending upon the boiling point of the alcohol used. The phosphorous pentoxide is slowly added to the alcohol while the mixture is vigorously agitated. The reaction is complete two to four hours after the addition of phosphorous pentoxide is completed.

The product formed in this reaction is an approximately equimolar mixture of mono-ester phosphate and di-ester phosphate. The reaction equation is as follows: 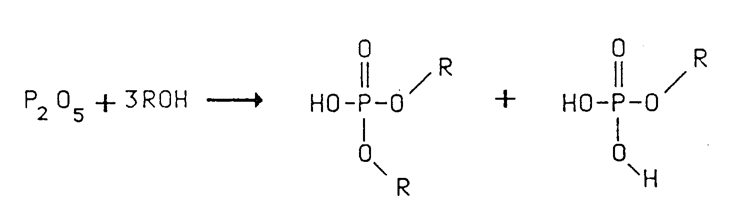
where R = an alkyl group with 1 to 18 carbon atoms. It is to be understood that the mono-ester reaction product is the microbiocidally active compound. The di-ester reaction product is either not microbiocidally active or is only slightly microbiocidally active. The mono-ester alkyl phosphate derivative is an effective microbiocidal compound and is capable of killing or inhibiting a wide variety of microorganisms including bacteria, yeasts, fungi, molds and viruses.

To obtain an alkyl phosphate derivative that is capable of diffusing through a non-aqueous material such as a fiber or plastic to the surface, the alkyl phosphate is reacted with a tertiary amine as shown in the following general equation: 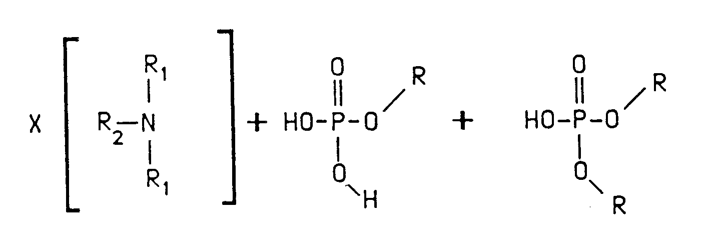
Resulting in a mixture of the following mono-alkyl phosphate amine product: 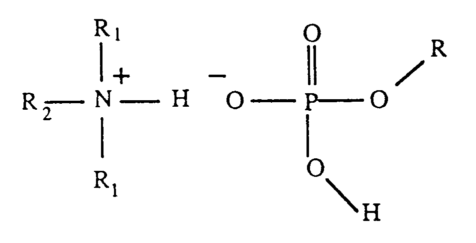
and the following di-alkyl phosphate amine product: 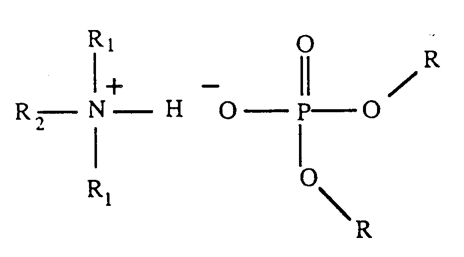
wherein:
R = an alkyl group of from 1 to 18 carbon atoms and R₂(R₁)₂N⁺H is a cocoamine cation.

The di-alkyl phosphate amine has little or no microbiocidal activity.

To obtain the diffusable mono-alkyl phosphate derivative of the present invention, the above reaction is carried out in the following manner:
Between approximately 0.5 and 3 moles of the cocoamine per mole of the mixed diphospho-esters from the first reaction is slowly added to the mixture. This reaction is carried out at a temperature of between approximately 80°C and 120°C depending on the mono-alkyl phosphate used. The most preferred tertiary amine is bis(hydroxyethyl) cocoamine. The preferred mono-alkyl phosphate derivative that is capable of diffusing in a plastic has the following formula: 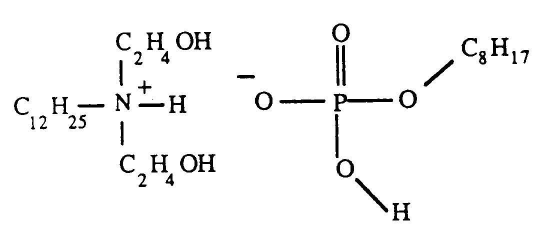
The microbiocidal activity of the phosphate additive of the present invention is evaluated as follows. Petri dishes are prepared using appropriate nutrient agar as a food source for the microorganism to be tested. The microorganism is evenly streaked onto the agar to form a lawn of microorganisms as is well known to one skilled in the art. A hole 6mm in diameter and 5mm deep is cut into the agar. 0.05 ml. of each of the indicated test compounds is placed in the hole and the inoculated petri dish is incubated for 24 hours at 37°C. After the 24 hour incubation period, the relative susceptibility of the test organisms to the phosphate additive of the present invention is demonstrated by a clear zone of growth inhibition around the test solution. This zone of inhibition is the result of two processes: (1) the diffusion of the compound and (2) growth of the bacteria. As the phosphate additive diffuses through the agar medium from the hole, its concentration progressively diminishes to a point where it is no longer inhibitory for the test organism. The area of the suppressed microbial growth, the zone of inhibition, is determined by the concentration of the phosphate additive present in the area. Therefore, within the limitations of the test, the area of the inhibition zone is proportional to the relative susceptibility of the microorganisms to the phosphate additive of the present invention.

After the 24 hour incubation period, each plate is examined and the diameters of the complete inhibition zones are noted and measured using either reflected light and a measuring device such as sliding calipers, a ruler, or a template prepared for this purpose and held on the bottom of the plate. The end point, measured to the nearest millimeter, is the point at which no visible growth that can be detected with the unaided eye minus the diameter of the test drop or sample. The area of the zone of inhibition is then calculated.

The following examples will serve to further illustrate the present invention without, at the same time, however, constituting any limitation thereof.

### Example I

A mono-ethyl phosphate is prepared as follows: One mole of phosphorous pentoxide is reacted with three moles of ethanol at a temperature of 60°C. The phosphorous pentoxide is slowly added to the ethanol while the mixture is vigorously agitated. At the reaction temperature of 60°C the reaction is complete in about two hours. The progress of the reaction is determined by titrating the acid that is produced with a solution of potassium hydroxide. The reaction products include approximately equimolar quantities of the mono-ethyl alkyl phosphate and the di-ethyl alkyl phosphate. The mono-ethyl alkyl phosphate is a microbiocidally active species.

### Example II

A mono-(2-ethylhexyl) phosphate is prepared as follows. One mole of phosphorous pentoxide is reacted with three moles of 2-ethylhexanol at a temperature of 100°C. The phosphorous pentoxide is slowly added to the ethanol while the mixture is vigorously agitated. At the reaction temperature of 100°C the reaction is complete in about two hours. The progress of the reaction is determined by titrating the acid that is produced with a solution of potassium hydroxide. The reaction products include approximately equimolar quantities of the mono-(2-ethylhexyl) alkyl phosphate and the di(2-ethylhexyl) alkyl phosphate. The mono-(2-ethylhexyl) alkyl phosphate is a microbiocidally active species.

### Example III

Since the preferred method of preparing the mono-alkyl phosphate of Examples I and II results in two reaction products, the mono-alkyl phosphate and the di-alkyl phosphate, the relative microbiocidal activity of each of the products is evaluated.

Three samples are tested:
1. 91% mono-(2-ethylhexyl) phosphate, 9% di-(2-ethylhexyl) phosphate
2. 55% mono-(2-ethylhexyl)phosphate and 45% di-(2-ethylhexyl) phosphate
3. 95% di-(2-ethylhexyl) phosphate, 5% mono-(2-ethylhexyl) phosphate.

Petri dishes are prepared using trypticase soy nutrient agar (Baltimore Biological Laboratory, Cockeysville, MD). The microorganisms used in this test are the Gram-positive *Staphylococcus aureus* and the Gram-negative *Pseudomonas aeruginosa*. Each microorganism is evenly streaked onto the agar to form a lawn of microorganisms as is well known to one of ordinary skill in the art. A hole 6mm in diameter and 5mm deep is cut into the agar. 0.05 ml. of each of the indicated test compounds is placed in the hole, and the inoculated petri dish is incubated for 24 hours at 37°C. After the 24 hour incubation period, the relative susceptibility of the test organisms to the phosphate additive of the present invention is demonstrated by a clear zone of growth inhibition around the test solution.

After the 24 hour incubation period, each plate is examined and the diameters of the complete inhibition zones are noted and measureda as described above. Each test is performed at least 6 times. The areas shown in Table A are the average of the 6 separate tests.

**Table A**

| **Organism** | **Zone of Inhibition in mm²** | | |
|---|---|---|---|
| | **Mono-ester** | **Mixture** | **Di-ester** |
| *S. aureus* | 415 | 283 | 113 |
| *P. aeruginosa* | 490 | 314 | 78.5 |

The results of Table A indicate that the mono-alkyl phosphate is the compound which has the significant amount of the microbiocidal activity.

### Example IV

A solution of an alkyl phosphate derivative is prepared by mixing 2 grams of the reaction product from Example I in 1000 ml. of water. The standard solution of the preferred alkyl phosphate derivative is serially diluted down to 0.02% and is evaluated against representative Gram negative and Gram positive bacteria. One measured drop (.05 ml) of the alkyl phosphate is placed on previously inoculated agar plates (Trypticase Soy Nutrient Agar, Baltimore Biological Laboratory, Cockeysville, Md.) and incubated for 24 hours at 35°C. The area of inhibition is then measured and recorded. The results are shown in Table B.

**Table B**

| **Organisms** | **Vol. %** | **Area of inhibition measured in mm²** |
|---|---|---|
| *Staphylococcus aureus* | 0.2 | 2827 |
| *Staphylococcus aureus* | 0.1 | 1256 |
| *Staphylococcus aureus* | 0.02 | 314 |
| *Staphylococcus aureus* | 0.002 | 0 |
| *Pseudomonas aeruginosa* | 0.2 | 314 |
| *Pseudomonas aeruginosa* | 0.1 | 314 |
| *Pseudomonas aeruginosa* | 0.02 | 314 |
| *Pseudomonas aeruginosa* | 0.002 | 0 |

As can be seen from the data in Table B, when sufficient quantities of the alkyl phosphate are dissolved in water, the solution is an unexpectedly strong microbiocide.

### Example V

An aqueous mixture of a microbiocidal alkyl phosphate is prepared by mixing the alkyl phosphate derivative from Example I with an aqueous detergent solution. The concentration of alkyl phosphate derivative is .05%. The microbiocidal detergent is heated to 85°C. Cotton fabric is then introduced and remains in the heated solution for 15 minutes. The fabric is then rinsed in water at 40° C, removed, and dried.

Square samples of the treated fabric of approximately 400 mm² are cut and placed on agar plates which have previously been inoculated with *Staphylococcus aureus* and *Pseudomonas aeruginosa*:; the plates are then incubated at 35°C for 24 hours.

After the 24 hour incubation, neither *Staphylococcus aureus* nor *Pseudomonas aeruginosa* are found to be present in or on the squares. Microscopic examination shows a halo or zone of inhibition around the individual threads.

### Example VI

A dry free-flowing mixture comprising a microbiocidal cleansing agent is prepared by mixing 0.3 grams of the alkyl phosphate derivative from Example I with 138.5 grams of "All" detergent as purchased over the counter. One gram of the cleansing agent mixture is then placed in the center of appropriately inoculated petri dishes and incubated for 24 hours at 37°C. Control plates are also prepared with one gram samples of the detergent without any phosphate additive. After this period of incubation, each plate is examined and the diameters of the inhibition zones are measured. The results are shown in Table C.

**Table C**

| **Organism** | **Zone of Inhibition in mm² for detergent and alkyl phosphate derivative** | **Zone of Inhibition in mm² for detergent (Control)** |
|---|---|---|
| *S. aureus* | 2827 | 706 |
| *P. aeruginosa* | 1017 | 113 |

The detergent alone exhibits some microbiocidal activity because of the presence of sodium hypochlorite which would be washed out of fabrics during the rinsing process. In any event, the detergent plus additive demonstrates a significant increase in microbiocidal activity over the detergent alone.

### Example VII

To produce a microbiocidal alkyl phosphate derivative that is capable of migrating from the interior of a synthetic fiber, fabric or plastic to the surface, the reaction product of Example II is neutralized with bis(hydroxyethyl) cocoamine. 1.3 moles of bis(hydroxyethyl) cocoamine per mole of the reaction product from Example II is slowly added to the reaction product from Example II until the pH is between approximately 3.2 and 3.8 in a 75% ethanol solution. This reaction is carried out at a temperature of 100°C. The reaction mixture is vigorously agitated during the reaction.

The resulting product is water insoluble and is suitable for incorporation into synthetic fibers and plastics as they are being formed or for topical application in an organic solvent such as ethyl alcohol, benzene or xylene.

### Example VIII

The microbiocidal capability of an alkyl phosphate amine is demonstrated by the following example. Between 0.5 moles and 3.0 moles of bis(hydroxyethyl) cocoamine per mole of the reaction product from Example II is slowly added to the reaction product from Example II until the pH of the solution is between approximately 3.2 and 3.8 in a 75% ethanol solution. This reaction is carried out at a temperature of 100°C. The reaction mixture is vigorously agitated during the reaction. The resulting products are tested for microbiocidal activity.

Petri dishes are prepared using trypticase soy nutrient agar (Baltimore Biological Laboratory, Cockeysville, MD). The microorganisms used in this test are the Gram-positive *Staphylococcus aureus* and the Gram-negative *Pseudomonas aeruginosa*. The microorganisms are evenly streaked onto the agar to form lawns of microorganisms as is well known to one of ordinary skill in the art. A hole 6mm in diameter and 5mm deep is cut into the agar. 0.05ml. of each of the indicated test compounds is placed in the hole and the inoculated petri dish is incubated for 24 hours at 37°C. After the 24 hour incubation period, the relative susceptibility of the test organisms to the phosphate additive of the present invention is demonstrated by a clear zone of growth inhibition around the test solution.

After the 24 hour incubation period, each plate is examined and the diameters of the complete inhibition zones are noted and measured.

The results are summarized in Table D.

**Table D**

| | **Molar Ratio of reactants** | ***S. aureus*** **Area of Inhibition** | ***P. aeruginosa*** **measured in mm²** |
|---|---|---|---|
| A. | Product from Example II | 3848 | 706 |
| B. | 0.5 moles cocoamine^{a} | 1520 | 614 |
| C. | 1.0 moles cocoamine^{a} | 907 | 706 |
| D. | 1.3 moles cocoamine^{a} | 452 | 1257 |
| E. | 1.5 moles cocoamine^{a} | 452 | 38 |
| F. | 2.0 moles cocoamine^{a} | 452 | 13 |
| G. | 2.5 moles cocoamine^{a} | 201 | 13 |
| H. | 3.0 moles cocoamine^{a} | 153 | 0 |
| I. | Cocoamine only | 153 | 0 |

| | | | |
|---|---|---|---|
| ^{a} Moles of cocoamine reacted with one mole of the product from Example II. | | | |

As can be seen in Table D, sample A, which is the reaction product from Example II, has excellant microbiocidal activity against both the Gram positive *Staphylococcus aureus* and the Gram negative *Pseudomonas aeruginosa*. The reaction product from Example II retains its microbiocidal activity against both these organisms even when reacted with up to 2 moles of the bis-hydroxyethyl cocoamine. When one mole of the reaction product from Example II is reacted with more than 2 moles of the cocoamine, the microbiocidal activity is diminished. The cocoamine itself has slight microbiocidal activity against the Gram positive *Staphylococcus aureus*. Thus, by neutralizing the 2-ethyhexyl phosphate with the bis-hydroxyethyl cocoamine, the antimicrobial activity of the the mono-alkyl phosphate is retained, and the compound now has the capability of diffusing from the interior to the surface of a synthetic fiber or a plastic material.

### Example IX

The alkyl phosphate derivative from Table D, Line D of Example VIII is added to a tumble-mixing machine containing polyethylene pellets so that the final concentration of alkyl phosphate derivative is 2% by weight. The thermoplastic pellets are tumble mixed until the alkyl phosphate derivative of the present invention is thoroughly distributed. After the sanitizing additive is mixed with and coated on the pelletized plastic material, the mixture is charged to a hopper of a conventional melt extruder where the mixture is melted and the sanitizing additive is homogeneously distributed throughout the melted mass by the action of the extruder. The resultant molten mass of plastic material is passed through a conventional spinneret to generate thermoplastic fibers containing the alkyl phosphate derivative.

### Example X

The mono-alkyl phosphate derivative from Table D, Line D of Example VIII is added to a tumble-mixing machine containing polyethylene terephthalate polyester pellets so that the final concentration of mono-alkyl phosphate derivative is 2% by weight. The thermoplastic pellets are tumble mixed until the alkyl phosphate derivative of the present invention is thoroughly distributed. After sanitizing additive is mixed with and coated the pelletized plastic material, the mixture is charged to a hopper of a conventional melt extruder where the mixture is melted and the sanitizing additive is homogeneously distributed throughout the melted mass by the action of the extruder as is well known to one of ordinary skill of the art. The resultant molten mass of plastic material is passed through a conventional spinneret to generate polyester fibers containing the alkyl phosphate derivative.

### Example XI

The alkyl phosphate derivative prepared in Example VII is used to prepare a self-sanitizing plastic material in accordance with the present invention. 0.1 parts of the compound prepared in Example I are added to one hundred parts of polyethylene pellets. The pellets are coated with the oily additive by tumbling the mixture for twenty minutes. The pellets so treated are then fused in a test tube by immersing the test tube in an oil bath at 200°C for twenty minutes. The test tube is then removed from the oil bath and allowed to cool to room temperature whereupon the molten mass solidifies. The cooled mass is then removed from the test tube and sawed into discs approximately 2 mm thick and 10 mm in diameter. No degradation or other unusual characteristics of the polyethylene discs is noted. The discs are placed in appropriately inoculated petri dishes containing nutrient agar. The agar is inoculated with various organisms and is allowed to incubate for 24 hours at 37°C. After the incubation period, the zone of inhibition around the discs is measured as previously described. The results are presented in Table E.

**Table E**

| **Organism** | **Type of Organism** | **Area of Inhibition in mm²** |
|---|---|---|
| *Staphylococcus aureus* | Gram-pos. bacteria | 314 |
| *Pseudomonas aeruginosa* | Gram-neg. bacteria | 50 |
| *Escherichia coli* | Gram-neg. bacteria | 113 |
| *Klebsiella species* | Gram-neg. bacteria | 201 |
| *Candida albicans* | Yeast | 314 |
| *Salmonella choleraesuis* | Gram-neg. bacteria | 153 |
| *Aspergillus niger* | Fungus | 314 |
| *Tricophyton mentagrophyte* | Fungus | 707 |

As can be seen in Table E, the test demonstrates significant bactericidal activity against both Gram negative and Gram positive organisms as well as against representative yeasts and fungi.

### Example XII

An epoxy resin using the alkyl phosphate derivative is formulated as follows:

| | |
|---|---|
| Epoxy resin | 88.2% by weight |
| TIO2 | 9.8% by weight |
| Alkyl phosphate from Example VIII Table D, Line D | 2.0% by weight |

The epoxy resin used in this example is referred to as DGEPPA or diglycidyl ether of bisphenol-A (Dow Chemical Company, Midland, MI). Other epoxy resins that can be used with the present invention are epichlorohydrin/ bisphenol-A, glycidated novolacs, epoxylated novolacs, and cycloaliphatic epoxy resins.

After thoroughly mixing the above ingredients, the resin system is allowed to react with a stoichiometric amount of hardener (cross linking reagent). Before the cross-linking reaction is completed, samples of he self-sanitizing epoxy are poured into 100x15 mm test tubes. Upon completion of the hardening reaction, the epoxy sample is a hard cylinder measuring 60 mm long and 15 mm in diameter and weighing approximately 28.89 grams. Samples are cut in the form of discs with a surface area of 176.63 mm². The cut samples are placed in petri dishes containing nutrient agar (Trypticase Soy Nutrient Agar, Baltimore Biological Laboratory, Cockysville, MD) inoculated with a lawn of the indicated microorganisms. It is found, upon incubation of the dishes that the epoxy disc inhibits the growth of bacteria and fungi around the specimen and creates a zone of inhibition. The results of the test are as follows:

**Table F**

| **Organism** | **Type of Organism** | **Area of Inhibition in mm²** |
|---|---|---|
| *Staphylococcus aureus* | Gram-pos. bacteria | 314 |
| *Pseudomonas aeruginosa* | Gram-neg. bacteria | 28 |
| *Escherichia coli* | Gram-neg. bacteria | 380 |
| *Klebsiella species* | Gram-neg. bacteria | 380 |
| *Candida albicans* | Yeast | 153 |
| *Salmonella choleraesuis* | Gram-neg. bacteria | 452 |
| *Aspergillus niger* | Fungus | 28 |
| *Tricophyton mentagrophyte* | Fungus | 50 |
| *Bacillus megaterium* | Gram-pos. bacteria | 13 |

As shown in Table F, the alkyl phosphate derivative, when added to epoxy resins, is effective in killing a wide variety of species of microorganisms.

### Example XIV

In this example, the alkyl phosphate derivative from Table D, Line D of Example VIII is used to prepare a self-sanitizing vinyl product in accordance with the present invention. A polyvinyl chloride (PVC) system using the microbiocidal additive of the present invention is formulated as follows:

### Test Sample

100 Grams of polyvinyl chloride
55 Grams of dioctylphthalate (plasticizer)
1.5 Grams Stabilizer
9.0 Grams TiO₂
1.0 Grams Color concentrate
3.5 Grams alkyl phosphate from Table D, Line D of Example VIII

### Control

100 Grams of polyvinyl chloride
55 Grams of dioctylphthalate (plasticizer)
1.5 Grams Stabilizer
9.0 GramsTiO2
1.0 Grams Color concentrate
The above samples are then poured on glass plates to a thickness of approximately 0.25 cm and cured in an oven at a temperature of approximately 325° F. After the sample has polymerized, test specimens from each formulation are cut into circles approximately 2 cm across.

Two test organisms are seeded on two separate petri dishes of agar. One dish is seeded with a lawn of *Staphylococcus aureus* at a concentration of greater than 10³ organisms per ml. The second dish is seeded with a lawn of *Pseudomonas cepacia* at a concentration of greater than 10³ organisms per ml.

One plug each of the test vinyl sample with the alkyl phosphate added and the control vinyl sample with no alkyl phosphate are placed onto the surface of the agar in each inoculated petri dish. The dishes are incubated in a humidified incubation chamber at a temperature of approximately 37°C for 24 hours. At the end of the 24 hour incubation period, the dishes are removed from the incubator and the area of clear zone of inhibition around the test samples is measured. The clear zone of inhibition around the samples represents inhibition of growth of bacteria due to the diffusion of antimicrobial alkyl phosphate from the vinyl plug. The results of the test are shown in Table H.

**Table H**

| **Sample** | **Test Organism Zone of inhibition in mm².** | |
|---|---|---|
| | ***Staphylococcus aureas*** | ***Pseudomonas cepacia*** |
| Test vinyl | 50 | 50 |
| Control | -0- | -0- |

As can be seen in Table H, the test demonstrates significant bactericidal activity against both Gram negative and Gram positive organisms.

While this invention has been described in detail with particular reference to preferred embodiments thereof, it will be understood that variations and modifications can be effected within the spirit and scope of the invention as described hereinbefore and as defined in the appended claims.
* wahrscheinlich 6

## Claims (Claims for the following Contracting State(s): BE, CH, DE, FR, GB, IT, LI, LU, NL, SE)

1. A microbiocidal composition comprising a substance and an effective amount of a monoalkyl phosphate derivative obtainable by:
(a) reacting 1 mole of phosphorous pentoxide with up to 3 moles of a C₁ to C₁₈ alkyl alcohol to form a mixture of a monoalkyl phosphoric acid ester and a dialkyl phosphoric acid ester; and then
(b) reacting the product of step (a) with between approximately 0.5 and 1.5 moles of cocoamine;
wherein the substance is selected from the group consisting of plastics, fibres, fabrics, water, a solvent, wood, detergents, non-permanent coatings, and permanent coatings.

2. The biocidal composition of Claim 1 that includes a monoalkyl phosphate derivative of the formula:

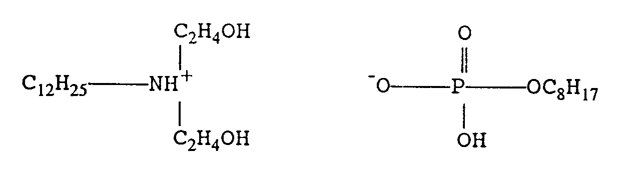

3. The microbiocidal composition of claim 1 further including a diffusion promoting compound selected from the group consisting of waxes, oils, and non-ionic detergents.

4. A method of preparing a microbiocidal composition comprising the steps of:
a. reacting 1 mole of phosphorus pentoxide with up to 3 moles of a C₁ to C₁₈ alkyl alcohol at a temperature between approximately 60°C and 120°C;
b. reacting the product of step a. with between approximately 0.5 to 1.5 moles of cocoamine; and
c. mixing an effective concentration of the product of step b. with a substance selected from the group consisting of plastics, fibres, fabrics, water, wood, detergents, non-permanent coatings and permanent coatings.

5. The method of Claim 4, wherein the alcohol is 2-ethylhexanol.

6. The method of Claim 4, wherein the cocoamine is bis(hydroxyethyl) cocoamine.

7. A method for inhibiting the growth of microorganisms on or in a material selected from the group consisting of plastics, fibres, fabrics, water, wood, detergents, non-permanent coatings and permanent coatings, comprising adding a biocidally effective amount of a composition including an effective amount of a monoalkyl phosphate derivative obtainable by:
(a) reacting 1 mole of phosphorous pentoxide with up to 3 moles of a C₁ to C₁₈ alkyl alcohol to form a mixture of a monoalkyl phosphoric acid ester and a dialkyl phosphoric acid ester; and then
(b) reacting the product of step (a) with between approximately 0.5 and 1.5 moles of cocoamine.

8. The method of Claim 7, wherein the composition includes a monoalkyl phosphate derivative of the formula:

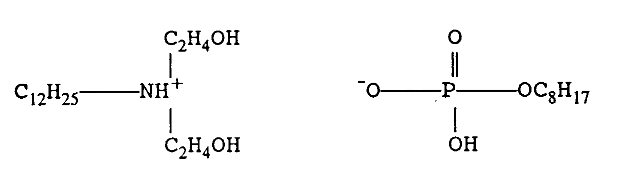

9. The method of Claim 7, wherein the amount of monoalkyl phosphate derivative added is 0.1 to 10% of the amount of the material.

## Claims (Claims for the following Contracting State(s): AT)

1. A process for preparing a microbiocidal composition comprising
(a) reacting 1 mole of phosphorous pentoxide with up to 3 moles of a C₁ to C₁₈ alkyl alcohol to form a mixture of a monoalkyl phosphoric acid ester and a dialkyl phosphoric acid ester;
(b) reacting the product of step (a) with between approximately 0.5 and 1.5 moles of cocoamine; and then admixing the resulting monoalkyl phosphate derivative with a substance selected from the group consisting of plastics, fibres, fabrics, water, a solvent, wood, detergents, non-permanent coatings, and permanent coatings.

2. The process of Claim 1 involving a monoalkyl phosphate derivative of the formula:

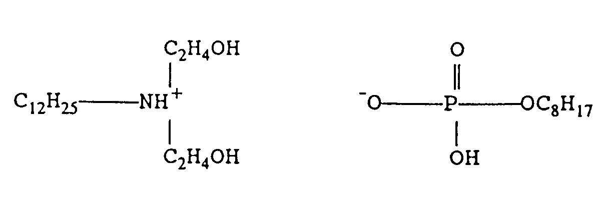

3. The process of claim 1 further comprising including a diffusion promoting compound selected from the group consisting of waxes, oils, and non-ionic detergents.

4. The method of Claim 1, wherein the alcohol is 2-ethylhexanol.

5. The method of Claim 1, wherein the cocoamine is bis(hydroxyethyl) cocoamine.

6. A method for inhibiting the growth of microorganisms on or in a material selected from the group consisting of plastics, fibres, fabrics, water, wood, detergents, non-permanent coatings and permanent coatings, comprising adding a biocidally effective amount of a composition including an effective amount of a monoalkyl phosphate derivative obtainable by:
(a) reacting 1 mole of phosphorous pentoxide with up to 3 moles of a C₁ to C₁₈ alkyl alcohol to form a mixture of a monoalkyl phosphoric acid ester and a dialkyl phosphoric acid ester; and then
(b) reacting the product of step (a) with between approximately 0.5 and 1.5 moles of cocoamine.

7. The method of Claim 6, wherein the composition includes a monoalkyl phosphate derivative of the formula:

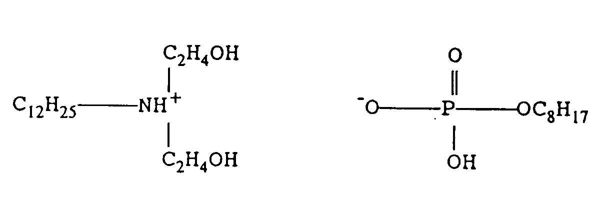

8. The method of Claims 6, wherein the amount of monoalkyl phosphate derivative added is 0.1 to 10% of the amount of the material.

## Patentansprüche (Patentansprüche für folgende(n) Vertragsstaat(en): BE, CH, DE, FR, GB, IT, LI, LU, NL, SE)

1. Mikrobizide Zubereitung, umfassend eine Substanz und eine wirksame Menge eines Monoalkylphosphatderivats, das durch
(a) Umsetzen von 1 Mol Phosphorpentoxid mit bis zu 3 Molen eines C₁ bis C₁₈-Alkylalkohols zur Bildung eines Gemischs aus einem Monoalkylphosphorsäureester und einem Dialkylphosphorsäureester und anschließendes
(b) Umsetzen des Produkts aus Stufe (a) mit zwischen etwa 0,5 und 1,5 Mol(en) Cocoamin erhältlich ist,
wobei die (betreffende) Substanz aus der Gruppe Kunststoffe, Fasern, Gewebe, Wasser, ein Lösungsmittel, Holz, Detergenzien, nicht-dauerhafte Überzüge und dauerhafte Überzüge ausgewählt ist.

2. Biozide Zubereitung nach Anspruch 1, enthaltend ein Monoalkylphosphatderivat der Formel:

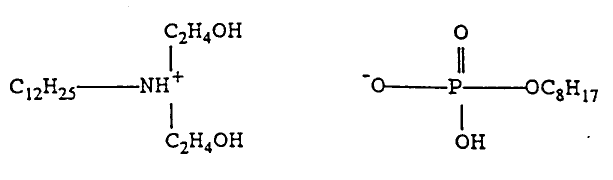

3. Mikrobizide Zubereitung nach Anspruch 1, die zusätzlich eine diffusionsfördernde Verbindung, ausgewählt aus der Gruppe Wachse, Öle und nicht-ionische Detergenzien, enthält.

4. Verfahren zur Herstellung einer mikrobiziden Zubereitung in folgenden Stufen:
a. Umsetzen von 1 Mol Phosphorpentoxid mit bis zu 3 Molen eines C₁ bis C₁₈-Alkylalkohols bei einer Temperatur zwischen etwa 60°C und 120°C;
b. Umsetzen des Produkts aus Stufe a mit zwischen etwa 0,5 und 1,5 Mol(en) Cocoamin und
c. Vermischen einer wirksamen Konzentration des Produkts aus Stufe b. mit einer Substanz, ausgewählt aus der Gruppe Kunststoffe, Fasern, Gewebe, Wasser, Holz, Detergenzien, nicht-dauerhafte Überzüge und dauerhafte Überzüge.

5. Verfahren nach Anspruch 4, wobei der Alkohol aus 2-Ethylhexanol besteht.

6. Verfahren nach Anspruch 4, wobei das Cocoamin aus Bis(hydroxyethyl)cocoamin besteht.

7. Verfahren zur Hemmung des Wachstums von Mikroorganismen auf oder in einem Material, ausgewählt aus der Gruppe Kunststoffe, Fasern, Gewebe, Wasser, Holz, Detergenzien, nicht-dauerhafte Überzüge und dauerhafte Überzüge, durch Zusatz einer biozid wirksamen Menge einer Zubereitung, enthaltend eine wirksame Menge eines Monoalkylphosphatderivats, das durch
(a) Umsetzen von 1 Mol Phosphorpentoxid mit bis zu 3 holen eines C₁ bis C₁₈-Alkylalkohols zur Bildung eines Gemischs aus einem Monoalkylphosphorsäureester und einem Dialkylphosphorsäureester und anschließendes
(b) Umsetzen des Produkts aus Stufe (a) mit zwischen etwa 0,5 und 1,5 Mol(en) Cocoamin
erhältlich ist.

8. Verfahren nach Anspruch 7, wobei die Zubereitung ein Monoalkylphosphatderivat der Formel: 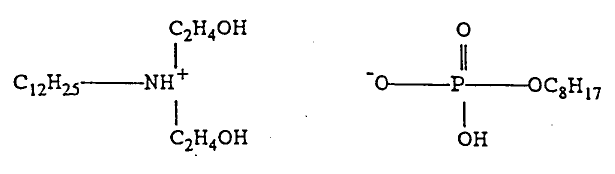 enthält.

9. Verfahren nach Anspruch 7, wobei die Zusatzmenge an Monoalkylphosphatderivat 0,1 bis 10% der Materialmenge beträgt.

## Patentansprüche (Patentansprüche für folgende(n) Vertragsstaat(en): AT)

1. Verfahren zur Herstellung einer mikrobiziden Zubereitung durch
(a) Umsetzen von 1 Mol Phosphorpentoxid mit bis zu 3 Molen eines C₁ bis C₁₈-Alkylalkohols zur Bildung eines Gemischs aus einem Monoalkylphosphorsäureester und einem Dialkylphosphorsäureester;
(b) Umsetzen des Produkts aus Stufe (a) mit zwischen etwa 0,5 und 1,5 Mol(en) Cocoamin und
anschließendes Vermischen des gebildeten Monoalkylphosphatderivats mit einer Substanz, ausgewählt aus der Gruppe Kunststoffe, Fasern, Gewebe, Wasser, ein Lösungsmittel, Holz, Detergenzien, nicht-dauerhafte Überzüge und dauerhafte Überzüge.

2. Das Verfahren nach Anspruch 1 unter Beteiligung eines Monoalkylphosphatderivats der Formel:

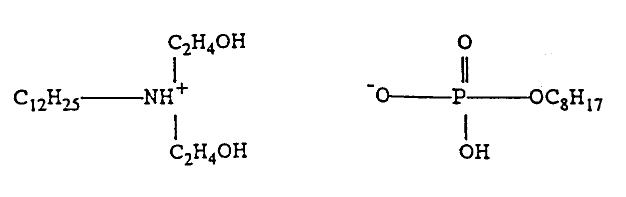

3. Das Verfahren nach Anspruch 1, bei welchem zusätzlich eine diffusionsfördernde Verbindung, ausgewählt aus der Gruppe Wachse, Öle und nicht-ionische Detergenzien mitverwendet wird.

4. Verfahren nach Anspruch 1, wobei der Alkohol aus 2-Ethylhexanol besteht.

5. Verfahren nach Anspruch 1, wobei das Cocoamin aus Bis(hydroxyethyl)cocoamin besteht.

6. Verfahren zur Hemmung des Wachstums von Mikroorganismen auf oder in einem Material, ausgewählt aus der Gruppe Kunststoffe, Fasern, Gewebe, Wasser, Holz, Detergenzien, nicht-dauerhafte Überzüge und dauerhafte Überzüge, durch Zusatz einer biozid wirksamen Menge einer Zubereitung, enthaltend eine wirksame Menge eines Monoalkylphosphatderivats, das durch
(a) Umsetzen von 1 Mol Phosphorpentoxid mit bis zu 3 Molen eines C₁ bis C₁₈-Alkylalkohols zur Bildung eines Gemischs aus einem Monoalkylphosphorsäureester und einem Dialkylphosphorsäureester und anschließendes
(b) Umsetzen des Produkts aus Stufe (a) mit zwischen etwa 0,5 und 1,5 Mol(en) Cocoamin
erhältlich ist.

7. Verfahren nach Anspruch 7*, wobei die Zubereitung ein Monoalkylphosphatderivat der Formel: 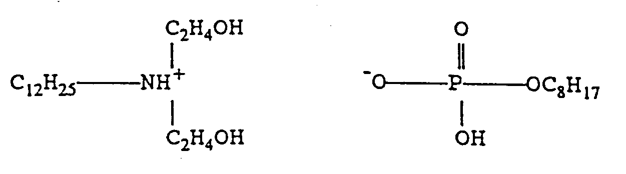 enthält.

8. Verfahren nach Anspruch 7, wobei die Zusatzmenge an Monoalkylphosphatderivat 0,1 bis 10% der Materialmenge beträgt.

## Revendications (Revendications pour l'(les) Etat(s) contractant(s) suivant(s): BE, CH, DE, FR, GB, IT, LI, LU, NL, SE)

1. Composition microbicide comprenant une substance et une quantité efficace d'un dérivé de monoalkylphosphate pouvant être obtenu :
(a) en faisant réagir 1 mole de pentoxyde phosphoreux avec jusqu'à 3 moles d'un alcool alkylique en C₁ à C₁₈ pour former un mélange d'un ester d'acide monoalkylphosphorique et d'un ester d'acide dialkylphosphorique ; et ensuite
(b) en faisant réagir le produit de l'étape (a) avec entre approximativement 0,5 et 1,5 mole d'une cocoamine ;
dans laquelle la substance est choisie dans le groupe constitué des plastiques, des fibres, des tissus, de l'eau, d'un solvant, du bois, des détergents, des revêtements non permanents, et des revêtements permanents.

2. Composition biocide selon la revendication 1, qui inclut un dérivé de monoalkylphosphate de formule :

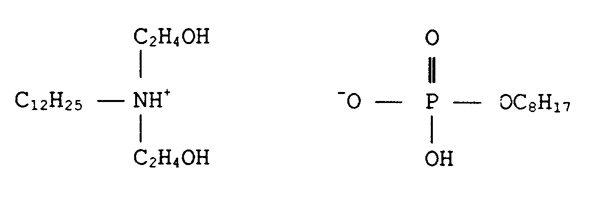

3. Composition microbicide selon la revendication 1, incluant en outre un composé favorisant la diffusion choisi dans le groupe constitué des cires, des huiles, et des détergents non ioniques.

4. Procédé de préparation d'une composition microbicide comprenant les étapes de :
a. réaction de 1 mole de pentoxyde phosphoreux avec jusqu'à 3 moles d'un alcool alkylique en C₁ à C₁₈ à une température entre approximativement 60 °C et 120 °C ;
b. réaction du produit de l'étape a. avec entre approximativement 0,5 et 1,5 mole d'une cocoamine ; et
c. mélange d'une concentration efficace du produit de l'étape b. avec une substance choisie dans le groupe constitué des plastiques, des fibres, des tissus, de l'eau, du bois, des détergents, des revêtements non permanents et des revêtements permanents.

5. Procédé selon la revendication 4, dans lequel l'alcool est le 2-éthylhexanol.

6. Procédé selon la revendication 4, dans lequel la cocoamine est la bis(hydroxyéthyl)cocoamine.

7. Procédé pour inhiber le développement de microorganismes sur ou dans un matériau choisi dans le groupe constitué des plastiques, des fibres, des tissus, de l'eau, du bois, des détergents, des revêtements non permanents et des revêtements permanents, comprenant l'addition d'une quantité biocidement efficace d'une composition incluant une quantité efficace d'un dérivé de monoalkylphosphate pouvant être obtenu :
(a) en faisant réagir 1 mole de pentoxyde phosphoreux avec jusqu'à 3 moles d'un alcool alkylique en C₁ à C₁₈ pour former un mélange d'un ester d'acide monoalkylphosphorique et d'un ester d'acide dialkylphosphorique ; et ensuite
(b) en faisant réagir le produit de l'étape (a) avec entre approximativement 0,5 et 1,5 mole d'une cocoamine.

8. Procédé selon la revendication 7, dans lequel la composition inclut un dérivé de monoalkylphosphate de formule :

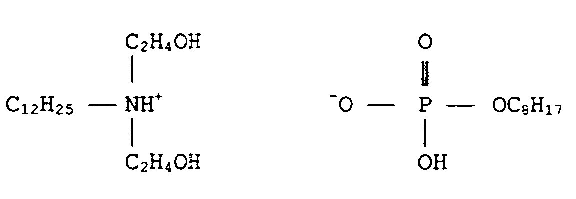

9. Procédé selon la revendication 7, dans lequel la quantité de dérivé de monoalkylphosphate ajoutée est 0,1 à 10 % de la quantité du matériau.

## Revendications (Revendications pour l'(les) Etat(s) contractant(s) suivant(s): AT)

1. Procédé pour préparer une composition microbicide comprenant :
(a) la réaction de 1 mole de pentoxyde phosphoreux avec jusqu'à 3 moles d'un alcool alkylique en C₁ à C₁₈ pour former un mélange d'un ester d'acide monoalkylphosphorique et d'un ester d'acide dialkylphosphorique ;
(b) la réaction du produit de l'étape (a) avec entre approximativement 0,5 et 1,5 mole d'une cocoamine ; et ensuite le mélange du dérivé de monoalkylphosphate obtenu avec une substance choisie dans le groupe constitué des plastiques, des fibres, des tissus, de l'eau, d'un solvant, du bois, des détergents, des revêtements non permanents, et des revêtements permanents.

2. Procédé selon la revendication 1, mettant en jeu un dérivé de monoalkylphosphate de formule :

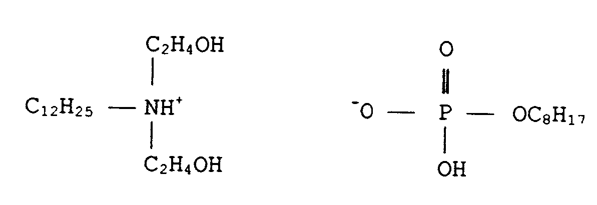

3. Procédé selon la revendication 1, incluant en outre un composé favorisant la diffusion choisi dans le groupe constitué des cires, des huiles, et des détergents non ioniques.

4. Procédé selon la revendication 1, dans lequel l'alcool est le 2-éthylhexanol.

5. Procédé selon la revendication 1, dans lequel la cocoamine est la bis(hydroxyéthyl)cocoamine.

6. Procédé pour inhiber le développement de microorganismes sur ou dans un matériau choisi dans le groupe constitué des plastiques, des fibres, des tissus, de l'eau, du bois, des détergents, des revêtements non permanents et des revêtements permanents, comprenant l'addition d'une quantité biocidement efficace d'une composition incluant une quantité efficace d'un dérivé de monoalkylphosphate pouvant être obtenu :
(a) en faisant réagir 1 mole de pentoxyde phosphoreux avec jusqu'à 3 moles d'un alcool alkylique en C₁ à C₁₈ pour former un mélange d'un ester d'acide monoalkylphosphorique et d'un ester d'acide dialkylphosphorique ; et ensuite
(b) en faisant réagir le produit de l'étape (a) avec entre approximativement 0,5 et 1,5 mole d'une cocoamine.

7. Procédé selon la revendication 7, dans lequel la composition inclut un dérivé de monoalkylphosphate de formule :

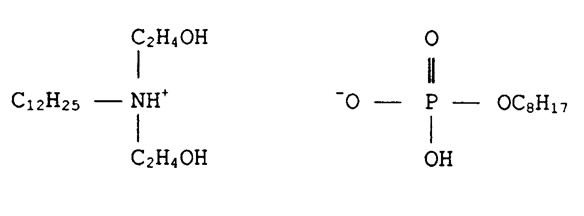

8. Procédé selon la revendication 7, dans lequel la quantité de dérivé de monoalkylphosphate ajoutée est 0,1 à 10 % de la quantité du matériau.
